Europäisches Patentamt

European Patent Office

Office européen des brevets

(19)

(11) Numéro de publication: **0 067 478**
**A1**

(12)

# DEMANDE DE BREVET EUROPEEN

(21) Numéro de dépôt: **82200691.2**

(51) Int. Cl.³: **B 62 D 1/18**

(22) Date de dépôt: **07.06.82**

(30) Priorité: **15.06.81 MC 1522**

(43) Date de publication de la demande:
**22.12.82 Bulletin 82/51**

(84) Etats contractants désignés:
**DE FR GB IT NL SE**

(71) Demandeur: **MICROTECHNIC S.A.**
**5 rue de l'Industrie**
**Monaco(MC)**

(72) Inventeur: **Prouvost, François**
**946 Av. du Serret**
**F-06190 Roquebrune Cap Martin(FR)**

(72) Inventeur: **Guillon, Paul**
**962, route de la Colle**
**F-06730 St. André(FR)**

(74) Mandataire: **Waxweiler, Jean et al,**
**OFFICE DENNEMEYER S.à.r.l. 21-25 Allée Scheffer**
**P.O.Box 41**
**Luxembourg(LU)**

(54) Support de colonne de direction pour véhicule automobile.

(57) L'invention concerne un support (10) de colonne de direction pour véhicule automobile. La colonne de direction munie d'un volant est logée dans un passage du support de façon à pouvoir être soumise à un mouvement de rotation autour de son axe par l'intermédiaire du volant. Ledit support (10) est adapté pour être fixé sur la caisse d'un véhicule automobile pour maintenir la colonne de direction dans une position fixe par rapport à la caisse du véhicule à l'aide de moyens de fixation (26, 28, 30, 42) conçus de sorte à garantir pendant l'utilisation normale du véhicule la dite position fixe de la colonne de direction par rapport à la caisse du véhicule, et en cas de choc du véhicule contre un obstacle, le déplacement avec consommation d'énergie du support par rapport à la caisse du véhicule sous l'impact du corps du conducteur de véhicule contre le volant. Un moyen disconnecteur (32) pour l'alimentation électrique des organes électriques du véhicule est actionné par le déplacement du support par rapport à la caisse du véhicule en cas de choc.

FIG. 1

FIG. 8

EP 0 067 478 A1

Croydon Printing Company Ltd.

COMPLETE DOCUMENT

0067478

SUPPORT DE COLONNE DE DIRECTION POUR VEHICULE AUTOMOBILE

L'invention concerne un support de colonne de direction pour véhicule automobile comprenant un passage pour une colonne de direction munie d'un volant, la colonne de direction étant logée dans ledit passage de façon à pouvoir être soumis à un mouvement de rotation autour de son axe par l'intermédiaire du volant, et un logement pour un système d'antivol, ledit support étant adapté pour être fixé sur la caisse d'un véhicule automobile pour maintenir la colonne de direction dans une position fixe par rapport à la caisse du véhicule.

En général, la liaison de la colonne de direction d'un véhicule automobile, sur la carrosserie, s'effectue au moyen d'un support métallique constitué de divers éléments assemblés par divers procédés (soudage, rivetage...etc) et remplissant dans la plupart des cas, les fonctions suivantes:
- Le montage et le branchement de divers équipements électriques, commandés par le conducteur sans qu'il soit pour cela dans l'obligation de lâcher le volant (lanternes, feux de croisement, feux de route, lave-glace, essuie-glace...etc).
- L'interdiction, à toute personne ne détenant pas la clé prévue à cet effet, de dévérouiller la colonne de direction bloquée par l'intermédiaire d'un boîtier antivol monté sur ce support, et faisant en outre fonction de contacteur électrique pour assurer la mise en marche du moteur.
- La liaison rigide et indéformable de la colonne de direction sur la caisse du véhicule permet, par l'intermédiaire de paliers (roulements à billes, à aiguilles... etc) sa rotation sur elle-même, afin de pouvoir commander les organes mécaniques du boîtier de direction et d'orienter ainsi à loisir la marche du véhicule.

Cette façon de fixer la colonne de direction sur la carosserie du véhicule se traduit, malheureusement, au moment du choc frontal du véhicule avec un obstacle, par le fait que, mis à part les cas où le constructeur, soucieux d'assurer une plus grande sécurité de l'utilisateur, a prévu un volant à bandes déformables (ce qui, compte tenu de la forme tulipée de celui-ci, diminue l'habitabilité du véhicule), le conducteur vient frapper, avec une force d'autant plus grande que la vitesse est élevée, dans l'ensemble de direction

# 0067478

- 2 -

qui, étant indéformable, ne peut absorber la moindre énergie.

Il en résulte, lorsque cela se produit, des lésions thoraciques qui peuvent être tragiques pour le conducteur.

La sécurité des passagers d'un véhicule automobile est souvent mise en cause lors d'un choc, qui ne doit pas nécessairement être très violent, par le fait que les divers organes électriques restent alimentés après le début d'un tel choc du véhicule, ce qui est souvent l'origine d'incendies dues à l'essence écoulée et aux étincelles qui se forment à des endroits où les cables électriques sous tension touchent la carosserie et mettent le feu à l'essence écoulée ou les vapeurs d'essence formées après un tel écoulement. Bien que des essais pour prevenir ces incendies aient été faits, l'utilisateur normal n'a pu profiter jusqu'à ce jour d'un dispositif coupe-circuit bon marché sur son véhicule automobile.

Le but de la présente invention est de créér un support pour la colonne de direction diminuant sensiblement ou éliminant lors d'un choc du véhicule avec un obstacle les risques de lésions thoraciques et autres du conducteur et d'incendie, c.à.d. d'augmenter d'une façon générale la sécurité d'un véhicule automobile.

Le but est réalisé selon l'invention par un support du genre décrit plus haut qui comprend des moyens de fixation du support à la caisse du véhicule conçus de sorte à garantir pendant l'utilisation normale du véhicule la dite position fixe de la colonne de direction par rapport à la caisse du véhicule, et en cas de choc du véhicule contre un obstacle , le déplacement avec consommation d'énergie du support par rapport à la caisse du véhicule sous l'impact du corps du conducteur de véhicule contre le volant, et un moyen disconnecteur pour l'alimentation électrique des organes électriques du véhicule actionné par le dit déplacement du support par rapport à la caisse du véhicule en cas de choc.

Selon un mode de réalisation les dits moyens de fixation sont des pattes solidaires du corps du support ayant une résistance à la rupture calculée en fonction de l'énergie à absorber en cas d'impact du corps du conducteur sur le volant pour éviter des lésions tragiques pour le conducteur.

Selon un autre mode de réalisation les dits moyens de fixation comprennent un moyen glissière intercalé entre le dit support et la caisse du véhicule et fixé de façon rigide à la caisse du véhicule, le dit moyen glissière étant conçu de sorte à permettre le dit déplacement du support en cas d'impact du corps du conducteur avec le volant lors d'un choc du véhicule contre un obstacle.

Toujours selon un mode de réalisation supplémentaire led dits moyens de fixation comprennent une glissière fixée de façon rigide à la caisse du véhicule, deux rampes coniques opposées à denture situées sur la glissière , des pattes de fixation sur des côtés opposés du corps du support et munies de dentures correspondantes destinées à s'encliqueter chacune dans la denture correspondante d'une des dites rampes et au moins un crochet rétractible sur le corps du support destiné à s'enliqueter derrière un arrêt approprié sur la glissière.

Le moyen disconnecteur peut être composé d'au moins deux éléments, mâle et femelle, adaptés à s'engager de façon amovible l'un dans l'autre, l'un des éléments étant fixé au corps du support, l'autre étant fixé de façon immobile par rapport à la carosserie. Suivant le mode de réalisation l'autre des deux éléments est fixé à la dite glissière ou sur une potence solidaire de la caisse du véhicule. L'un des deux éléments peut être fixé sur une patte incorporée au corps du support.

Le moyen disconnecteur comprend au moins autant d'éléments de contact qu'il y a de circuits à couper dans une application particulière.

Au cours des dernières années, les progrès spectaculaires réalisés dans le domaine des matières plastiques techniques, et plus particulièrement des techno-plastiques (polyamides, polyacétals, polycarbonates, polytéréphtalates,, styréniques, polysulfones, PPO modifiés), ont permis, d'une part, une meilleure maîtrise de leurs caractéristiques physiques, mécaniques, électriques et, d'autre part, par l'adjonction de charges nobles telles que: talc, fibres ou billes de verre et fibres de carbone, d'obtenir des matériaux à très hautes caractéristiques. Ces divers matériaux , modelés suivant des procédés de transformation, comme l'injection, faisant appel aux toutes dernières techniques de pointe, peuvent désormais s'employer pour réaliser des pièces mécaniques de toutes natures et de très haute technicité. Le support selon l'invention est avantageusement fabriqué sous forme monobloc en matière plastique en utilisant les procédés et matières appropriés.

L'invention sera maintenant décrite à titre d'exemple en se référant aux dessins annexés dans lesquels:

La figure 1 représente un support de direction monobloc vu de face;

la figure 2 représente en vue de face coupée le support de direction monobloc de la figure 1;

la figure 3 représente le support de direction monobloc de la figure 1 en vue de dessus;

la figure 4 représente le support de direction monobloc de la figure 1 en vue du dessous;

la figure 5 représente en vue de face le dispositif permettant la déconnexion automatique des branchements électriques en relation avec le support de direction monobloc de la figure 1;

la figure 6 représente en vue de face coupée un support de colonne de direction monté dans une glissière;

la figure 7 représente avec plus de détail , en vue du dessus, le support de colonne de direction selon la figure 6;

la figure 8 représente en vue du dessus la glissière et le support de colonne de direction assemblé;

la figure 9 montre la glissière de la figure 6 en vue de profil;

la figure 10 représente , en vue de face, le support et la glissière selon la figure 6 avec le dispositif permettant la déconnexion automatique des branchements électriques.

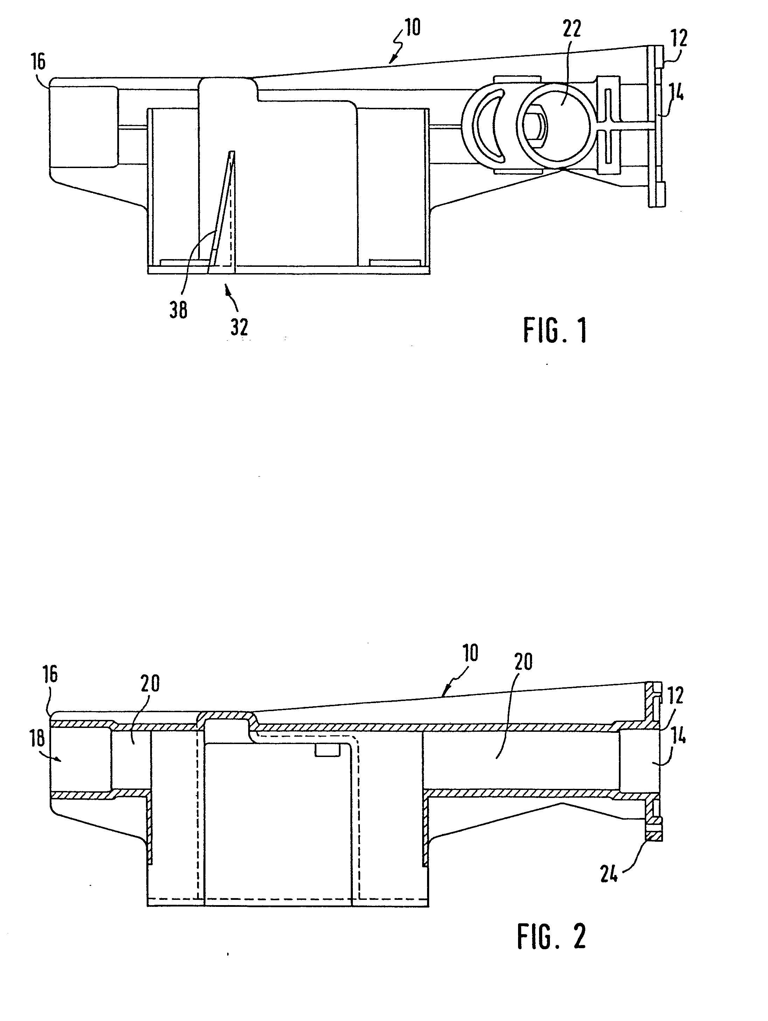

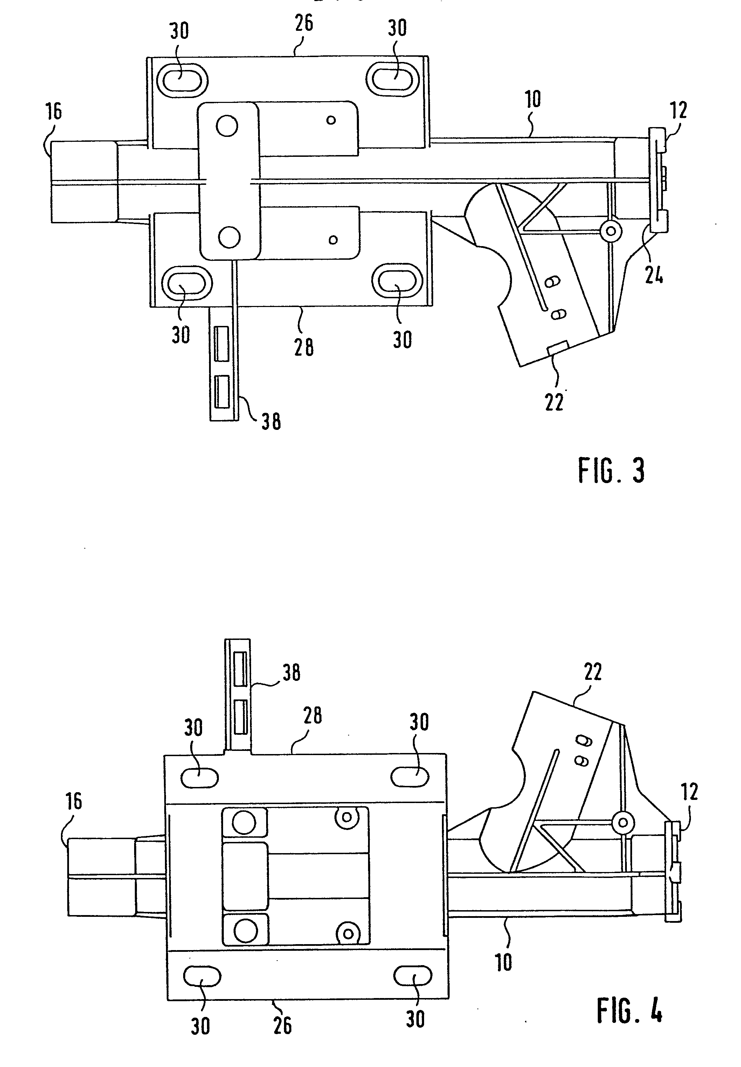

Les figures 1 à 4 représentent un mode de réalisation d'un support de colonne de direction 10 selon l'invention en vue de face, en vue de face coupée, en vue de dessus et en vue de dessous. Ce support 10 a une extrémité 12 côté volant de direction munie d'une ouverture 14 et une extrémité 16 côté boîtier de direction munie d'une ouverture 18. Entre ces deux ouvertures 14 et 18 s'étend un passage 20 recevant la colonne de direction (non montrée). La colonne direction est logée dans le passage 18 à l'aide de moyens (non montrés) permettant sa rotation autour de son axe par l'intermédiaire d'un volant (non montré), sans pour autant permettre un déplacement de celle-ci en direction axiale.

Le support 10 comprend en outre un logement 12 pour le système antivol, qui peut en outre faire fonction de contacteur électrique pour la mise en marche du moteur. Sur le côté volant du support 10 est prévue une platine 24 destinés à recevoir différents systèmes de commande d'organes électriques, tels que lanternes, feux de croissement, feux de route, lave-glace, essuie-glace, ..etc. pour leur mise en marche sans que le conducteur ait besoin de lâcher le volant.

Le corps du support 10 est en outre muni à sa base d'une surface de fixation ou deux pattes 26,28 du support à la caisse de la carosserie. Il est évident pour l'homme de l'art comment le support de la colonne sera fixé à l'aide de vis et écrous (non représenté) à la caisse de la carosserie de véhicule à la hauteur du tableau de bord, par exemple. Ces pattes 26,28 sont munies de trous de fixation 30 par lesquelles passent les vis pour fixer le support à la carosserie.

Pour atteindre le but de l'invention, les pattes de fixation 26,28 seront conçues en sorte que leur rupture au niveau des points d'attache permettra, en cas de choc du conducteur sur le volant, l'effacement de l'ensemble de la direction vers l'avant. La résistance à la rupture des pattes de fixation (26,28) sera caclulée en fonction des paramètres à respecter, notamment la quantité d'énergie qu'elles doivent absorber, qui seront indiqués par les différents constructeurs de véhicules. La technique de réalisation de ces pattes à partir de matières synthétique est bien connu à l'homme de l'art, ainsi que les calculs nécessaires pour obtenir la résistance à la rupture exigée; ceci ne fait pas partie de l'invention.

A la figure 1 on voit en outre le système disconnecteur (32) pour le faisceau de conducteurs électriques menant d'un côté vers l'antivol et les systèmes de commande des organes électriques du véhicule et de l'autre côté vers la batterie, l'allumage du moteur et les organes électriques du véhicule. Le disconnecteur comprend un élément mâle 34 avec des fiches mâles reliés aux conducteurs menant vers l'anivol et les divers systèmes de commande, et un élément femelle 36 avec des fiches femelles reliées aux conducteurs menant vers la batterie, l'allumage et les divers organes électriques. L'élément mâle 34 est montée sur une pate de fixation 38 incorporée au corps du support 1, tandis que l'élément femelle 36 est monté sur une potence 40 solidaire de la caisse du véhicule.

Lors d'une utilisation normale du véhicule les éléments, mâle et femelle, ainsi que les fiches mâles et femelles, sont emboîtés l'un dans l'autre et une connection électrique est établie entre les conducteurs de part et d'autre du disconnecteur. Cependant lorsque lors d'un choc du véhicule contre un obstacle le corps du conducteur vient se heurter contre le volant avec une violence suffisante pour causer la rupture des pattes de fixation 26,28 du support 10 de colonne de direction, celui-ci se déplace sous l'impact du corps heurtant le volant (non montré) en direction axiale de la colonne de direction vers le boîtier de direction (non montré) (vers la gauche dans les figures 1 à 5) par rapport à la caisse du véhicule. Sous l'effet de ce déplacement l'élément mâle 34 du système disconnecteur 32 est éloigné de l'élément femelle 36; ceci est dû à la fixation de l'élément mâle à la patte de fixation 38 solidaire du corps du support 10 et la position fixe de l'élément femelle 36 sur la potence 40 solidaire de la caisse de la carosserie. Par ce déplacement sur une distance suffisante , les fiches femelles 36 sont également retirées des fiches mâles 34, ce qui interrompt les circuits (non montrés) auxquels appartiennent les dits conducteurs.

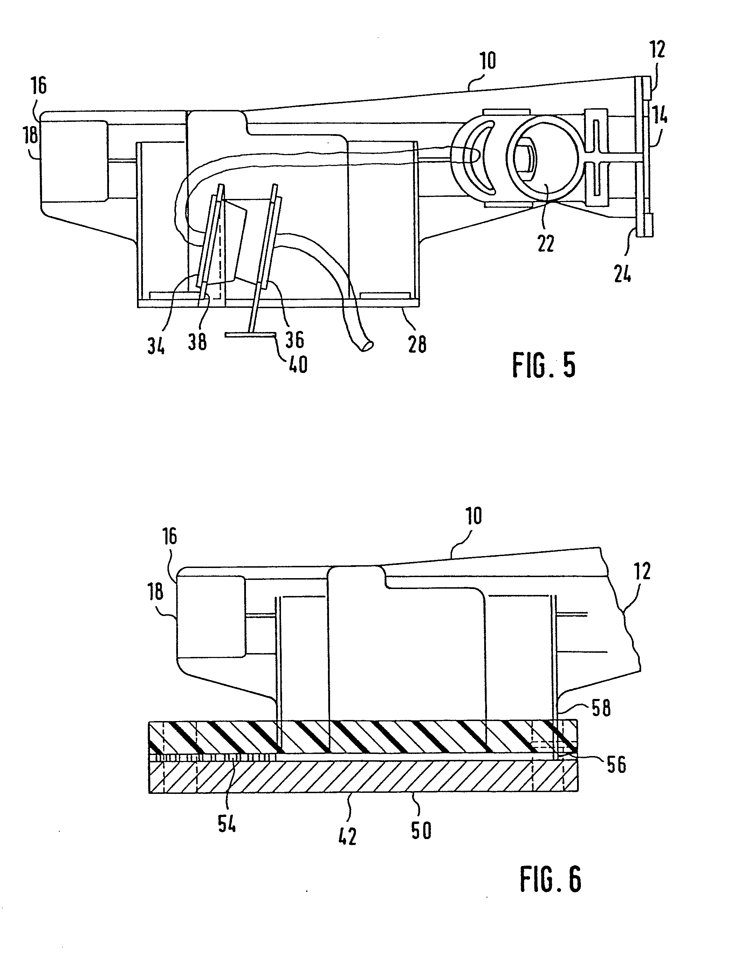

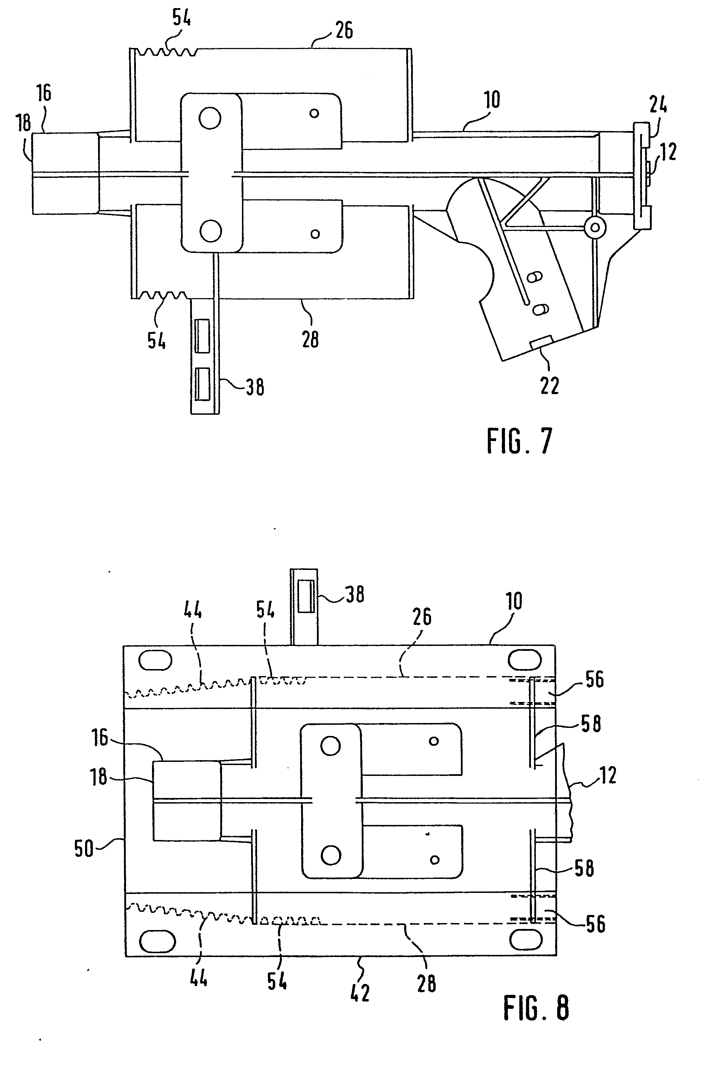

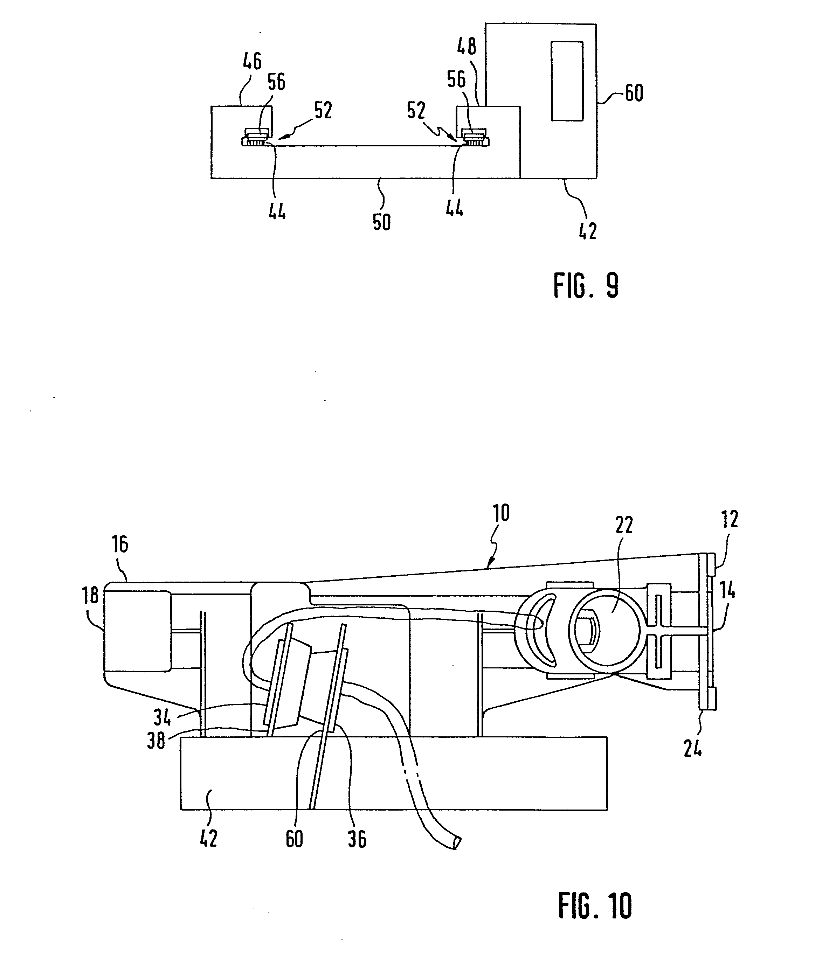

Dans les figures 6 à 10, on trouve un autre mode de réalisation de l'invention dans lequel un moyen de fixation différent à celui du mode de réalisation des figures 1 à 5. Cet autre mode de réalisation ne différant de celui qui vient d'être décrit uniquement par sa fixation, la description qui suit se bornera à cette différence et référence est faite à ce qui précède pour les éléments identiques à ce mode de réalisation qui vient d'être décrit. Pour cette raison également des numéros de référence identiques sont utilisés dans toutes les figures pour désigner les éléments ou parties identiques.

Dans ce mode de réalisation supplémentaire, la fixation se fait à l'aide d'un élément 42 formant glissière, désigné ci-après simplement par le mot glissière. Cette glissière 42 est fixée de façon rigide à la carosserie ou caisse (non montrée) du véhicule. Cet élément glissière 42 permettra de freiner le déplacement, vers l'avant, de l'ensemble de direction obtenu sous l'effet d'un choc. Cette fonction destinée à absorber le maximum d'énergie communiquée à la colonne de direction par le conducteur sous l'effet du choc, sera réalisée, par exemple, en intercalant une pièce possédant un profil spécial entre le support de la colonne de direction et la carrosserie. Cette pièce assurera la position rigoureusement fixe du support au cours de toute utilisation normale, mais fera office de glissière et de frein en cas de choc, afin d'obtenir un déplacement conforme à la course et à la décélération souhaitées de l'ensemble de la colonne de direction.

Dans le mode de réalisation préféré supplémentaire représenté , l'élément glissière 42 comprend au moins sur le côté boîtier de direction, un système de deux rampes (44) à denture inclinées vers l'intérieur. Les deux rampes 42 sont disposées sur deux côtés opposés 46,48 de la glissière 42 dans une fente formée par le fond 50 rabattu sur lui même le long des deux côtés opposés 46,48 pour former une fente 52 sur chaque côté destinée à recevoir la patte de fixation 26,28 du support 10.

Les pattes de fixation 26,28 du support 10 de colonne de direction sont celles munies sur le côté boîtier de direction d'un système de deux rangés coniques 54 à denture correspondsant à la denture sur la glissière 42. Les dentures des pattes des deux rangés coniques 54 s'encliquete- ront dans les dentures de la glissière 42 lors de l'assem-

- 8 -

blage.

Sur le côté volant de la glissière 42 on trouve au moins un, de préférence deu crochets 56 disposé le long du bord transversal entre les côtés à rampes 44. Les crochets 56 s'effaceront lors du montage de support dans la glissière et l'empêcheront de ressortir de celle-ci lorsqu'ils auront retrouvé leur position normale après l'assemblage du support 10 et de la glissière 42.

Le support 10 et la glissière 42 sont assemblés de la façon suivante. Les pattes de fixation 26,28 du support sont introduites sur le coté volant de la glissière 42 dans les fentes 52 et le support 10 est avancé dans la glissière jusqu'à ce que les dentures des rampes coniques 54 sur les pattes 26,28 s'encliquettent dans la denture des systèmes de rampes coniques 44 dans les fentes 52 de la glissière 42 et que les crochets 56 retrouvent leur position normale derrière un rebord 58 du côté volant du support 10. De cette façon le support 10 est monté dans la glissière 42 fixée à la caisse (non montrée) de véhicule pour remplir les fonctions recherché par l'objet de l'invention.

Dans ce mode de réalisation un système disconnecteur 32 est également prévu. Son élément mâle est de nouveau monté sur la patte de fixation 38, tandis que son élément femelle est montée sur une patte 60 solidaire de la glissière 42.

Lors d'un choc du véhicule muni du support de colonne de direction représenté deux figures 6 à 10 contre un obstacle, l'impact du corps du conducteur sur le volant avec une violence suffisante déplacera par l'intermédiaire de la colonne de direction le support 10 dans la glissière 42 en dircection du boîtier de direction. Les dentures des rampes 44 et 54 glisseront les unes sur les autres et agiront comme frein en consommant de l'énergie d'impact pour leur déformation. Ceci amortira le choc subi par le conducteur frappant sur le volant . Le déplacement du support 10 dans la glissière 42 éloignera l'élément mâle 34 solidaire du support et l'élément femelle 36 solidaire de la glissière et coupera les circuits dans lesquels le système disconnecteur est incorporé.

Le support 10 est réalisé de préférence en forme monobloc en matière synthétique. Les progrès réalisés dans le domaine des matières plastiques techniques, et plus particulièrement des techno-plastiques (polyamides, polyacétals, polycarbonates, polytéréphtalates, styréniques, polysulfones, PPO modifiés), permettent , d'une part, une meilleure maîtrise de leurs caractéristiques physiques, mécaniques, électriques et, d'autre part, par l'adjonction de charges nobles telles que : talc, fibres ou billes de verre et fibres de carbone, d'obtenir des matériaux à très hautes caractéristiques permettant la réalisation du support 10 de colonne de direction décrit, ainsi que de sa glissière suivant l'application désirée, tout en respectant les exigeances quant à la résistance et fiabilité posées pour les constructeurs de véhicules automobiles.

Le support selon l'invention permet un accroissement important de la sécurité des véhicules autombiles, matérialisé par :

a) la diminution sensible du risque de traumatismes ou de lésions thoraciques pour le conducteur grâce à l'effacement vers l'avant du volant, rendu possible en cas de choc frontal, et de la grande quantité d'énergie absorbée au cours de ce déplacement.

b) la diminution notoire du risque d'incendie pouvant survenir en cas de choc frontal violent, grâce à la fonction de coupe-circuit automatique de l'allumage, obtenu par la déconnexion du faisceau électrique du boîtier antivol, du faisceau électrique général, rendue possible par le mouvement du support de la colonne de direction par rapport à la caisse du véhicule.

La réalisation du support en monobloc en matière plastique entraîne une diminution conséquente du poids de la pièce plastique par rapport à la pièce métallique, permettant par là-même, soit d'augmenter la charge utile du véhicule, soit de diminuer sa consommation.

REVENDICATIONS

1. Support de colonne de direction pour véhicule automobile comprenant un passage pour une colonne de direction munie d'un volant, la colonne de direction étant logée dans ledit passage de façon à pouvoir être soumise à un mouvement de rotation autour de son axe par l'intermédiaire du volant, et un logement pour un système d'antivol, ledit support étant adapté pour être fixé sur la caisse d'un véhicule automobile pour maintenir la colonne de direction dans une position fixe par rapport à la caisse du véhicule, caractérisé par des moyens de fixation (26,28,30,42) du support à la caisse du véhicule conçu de sorte à garantir pendant l'utilisation normale du véhicule la dite position fixe de la colonne de direction par rapport à la caisse du véhicule, et en cas de choc du véhicule contre un obstacle, le déplacement avec consommation d'énergie du support par rapport à la caisse du véhicule sous l'impact du corps du conducteur de véhicule contre le volant, et un moyen disconnecteur (32) pour l'alimentation électrique des organes électriques du véhicule actionné par le dit déplacement du support par rapport à la caisse du véhicule en cas de choc.

2. Support selon la revendication 1, caractérisé en ce que les dits moyens de fixation (26,28,30,42) sont des pattes (24,26) solidaires du corps du support (10) ayant une résistance à la rupture calculée en fonction de l'énergie à absorber en cas d'impact du corps du conducteur sur le volant pour éviter des lésions tragiques pour le conducteur.

3. Support selon la revendication 1, caractérisé en ce que les dits moyens de fixation (24,26,30,42) comprennent un moyen glissère (26,28,42) intercalé entre ledit support (10) et la caisse du véhicule et fixé de façon rigide à la caisse du véhicule, ledit moyen glissière étant conçu de sorte à permettre le dit déplacement du support en cas d'impact du corps du conducteur avec le volant lors d'un choc du véhicule contre un obstacle.

4. Support selon la revendication 1, caractérisé en ce que lesdits moyens de fixation ( 26,28,30,42) comprennent une glissière (42) fixée de façon rigide à la caisse du véhicule, deux rampes coniques (44) opposées à denture situées sur la glissière (42), des pattes de fixation (24,26) sur des côtés opposés du corps du support et munies de dentures correspondantes destinées à s'engliqueter chacune dans le denture d'une des dites rampes (44) et au moins un crochet (56) rétractible sur le corps du support (10) destiné à s'engliqueter derrière un arrêt (58) approprié sur la glissière.

5. Support selon l'une quelconque des revendications 1à4, caractérisé en ce que le dit moyen disconnecteur (32) est composé d'au moins deux éléments (34,36), mâle et femelle, adaptés à s'engager de façon amovible l'un dans l'autre, l'un des éléments (34) étant fixé au corps du support (10),l'autre (36) étant fixé de façon immobile par rapport à la carosserie.

6. Support selon la revendication 5, caractérisé en ce que l'autre 60 des dits éléments,mâle et femelle, est monté sur une patte (60) solidaire de la dite glissière (42).

7. Support selon la revendication 5, caractérisé en ce que l'autre (36) des deux éléments, mâle et femelle, est fixé sur une potence (40) solidaire de la caisse du véhicule.

8. Support selon l'une quelconque des revendications 5 à 7, caractérisé en ce que l'un (34) des dits éléments, mâle et femelle,est fixé sur une patte (38) incorporée au corps du support (10).

9. Support selon l'une quelconque des revendications 5 à 8, caractérisé en ce que chaque élément (34,36) du dit moyen disconnecteur (32) comprend autant d'éléments de contact qu'il y a de conducteurs électriques a couper.

10. Support selon l'une quelconque des revendications 1 à 9, caractérisé en ce que ledit support (10) est fait en matière plastique sous forme monobloc.

FIG. 1

FIG. 2

FIG. 3

FIG. 4

FIG. 5

FIG. 6

FIG. 7

FIG. 8

FIG. 9

FIG. 10

Office européen
des brevets

**RAPPORT DE RECHERCHE EUROPEENNE**

Numéro de la demande

EP 82 20 0691

| | | | |
|---|---|---|---|
| **DOCUMENTS CONSIDERES COMME PERTINENTS** | | | |
| Catégorie | Citation du document avec indication, en cas de besoin, des parties pertinentes | Revendication concernée | CLASSEMENT DE LA DEMANDE (Int. Cl. ³) |
| X | US-A-2 888 836 (FELTS) *Revendications; figures 1,2* | 1 | B 62 D 1/18 |
| A | US-A-2 800 190 (DVORAK) *En entier* | 1 | |
| A | FR-A-1 568 123 (COPIN) *En entier* | 1 | |
| A | US-A-4 102 217 (YAMAMOTO) | | |
| A | US-A-3 747 427 (MILTON) | | |
| A | FR-A-1 538 898 (G.M.) | | |

DOMAINES TECHNIQUES
RECHERCHES (Int. Cl. ³)

B 62 D

Le présent rapport de recherche a été établi pour toutes les revendications

| Lieu de la recherche | Date d'achèvement de la recherche | Examinateur |
|---|---|---|
| LA HAYE | 08-09-1982 | PIRIOU J.C. |